**Europäisches Patentamt**

**European Patent Office**

**Office européen des brevets**

(19)

(11) **EP 1 645 856 A1**

(12) **EUROPEAN PATENT APPLICATION**

(43) Date of publication:
**12.04.2006 Bulletin 2006/15**

(51) Int Cl.:
***G01K 3/04*** *(2006.01)*

(21) Application number: **04023790.1**

(22) Date of filing: **06.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **3M Innovative Properties Company**
**St. Paul,**
**Minnesota 55133-3427 (US)**

(72) Inventors:
 • **Skinner, David John**
  **Bridgend CF31 2QS (GB)**
 • **Romann, Karl-Heinz**
  **41352 Korschenbroich (DE)**
 • **Küpper, Anton**
  **41564 Kaarst (DE)**

(74) Representative: **Vossius & Partner**
 **Siebertstrasse 4**
 **81675 München (DE)**

(54) **Microstructured time dependent indicators**

(57)     The invention provides an article comprising a substrate having a micro-structured surface that defines a plurality of channels and a fluid that is separated from the substrate until activation of the article is desired, wherein the article is designed such that it can be activated at a desired point in time to allow contact of the fluid with at least one of the channels of the substrate, said article being adapted for providing a measurable variable electrical characteristic, said variability being in correspondence with the progress of the fluid as it migrates through the channels of the substrate.

Fig. 2

**EP 1 645 856 A1**

**Description**

FIELD OF THE INVENTION

The present invention provides time dependent indicators including but not limited to timers and time/temperature indicators.

BACKGROUND OF THE INVENTION

One simple way of providing an indication of when the useful life of a perishable product has expired is to mark each product with a suggested date by which that product should be used. However, there is a shortcoming in this method in that the actual useful life of perishable products is dependent on the temperature history to which the product is exposed because the rate of degradation of a perishable product usually increases with increasing temperature. In other words, a perishable product will generally have a shorter remaining useful life when exposed to a certain period at a relatively high temperature than when exposed to the same period at a relatively low temperature. More broadly, the rate of change of a particular property or characteristic of any material or product may increase with increasing temperature. Therefore, marking a product with a "use by" date must be based on assumptions about the anticipated thermal exposure of the particular product. However, the actual exposure cannot always be predicted or controlled, hence the need for a time-temperature indicator.

In the art, timers and time-temperature indicators are suggested to overcome such problems.

Applications for time indicators may be divided into two broad categories. The first category includes time indicators that measure not only time, but take into account the actual cumulative thermal exposure of the product. This objective is accomplished by having the rate of change of the indicator increase with temperature according to a desired function. Some such indicators require the attainment of a threshold temperature, below which the indicator does not change. Others respond more continuously to changes in temperature. This type of time indicator is typically referred to as a "time-temperature indicator."

The second category of applications includes time indicators in which the thermal sensitivity is minimized. The time indicators work much like a timepiece, giving a visual indication of time elapsed. This type of time indicator is frequently referred to as a "timer."

Timers and time-temperature indicators are known which operate by chemical reaction mechanisms, diffusion mechanisms, and capillary-driven fluid wicking mechanisms. For a discussion of several types of indicators, reference is made to Dee Lynn Johnson, "Indicating Devices," in The Wiley Encyclopedia of Packaging Technology, 400-406 (John Wiley & Sons, 1986).

Time and time-temperature indicators are useful in a variety of applications such as, for example, monitoring the useful life of perishable items. Such perishable items include, but are not limited to, foods, food additives such as aspartame, biological materials, drugs, cosmetics, photographic supplies, and vaccines. Time indicators would also be useful to monitor time elapsed and expiration in a variety of applications that do not involve perishable items. For example, security badges could have a time indicator to mark expiration. Time indicators could also be useful as reminders that a certain task and/or item needs to be replaced, completed or renewed. Time indicators could also be used in novelty items and gaming pieces.

WO 01/88634 describes an article that comprises a substrate having a microstructured surface that defines a plurality of channels; and a fluid that is separated from the substrate until activation of the article is desired; wherein the article is designed such that it can be manipulated to allow contact of the fluid with at least some of the channels of the substrate to activate the article; and wherein the article is designed to provide an indication of the progress of the fluid as it migrates through the channels of the substrate.

SUMMARY OF THE INVENTION

It is desirable to have time and time-temperature indicators that enable automatic and/or remote tracking and interrogation of the indicator. This type of indicator would be useful in many applications for which time and time-temperature indicators are currently employed, particularly when it is desirable to be able to record, at each transaction point in a logistics chain, the time or thermal exposure to which items have been subjected. The present invention has been made with this in mind.

The articles of the invention preferably also have a high level of accuracy and are easy to read. They are also preferably self-contained and preferably allow for activation upon demand. By appropriate selection of the fluid (temperature sensitive or relatively temperature insensitive, for example) the article may function, for example, as a time/temperature indicator or a timer. The article is preferably capable of providing a highly accurate readout on progress and end-point determination.

The present invention provides an article comprising: a substrate; a fluid separated from the substrate until activation of the article enables the fluid to contact the substrate; the substrate being such that the fluid can migrate along said substrate at a rate dependent on time or on time and temperature, said article being adapted for providing a measurable variable electrical characteristic, said variability being in correspondence with the progress of the fluid as it migrates along the substrate. Preferably, the measurable variable characteristic is capacitance, and/or conductivity, and/or voltage.

Preferably, the substrate has a micro-structured surface that defines a plurality of channels, the said variability being in correspondence with the progress of the fluid as it migrates along the channels.

According to a first embodiment of the present invention, the article of the present invention further comprises a conductive layer located adjacent to the surface of the substrate to be contacted by the fluid as it migrates along the substrate.

It is preferred in this embodiment that the fluid is a conductive/electrolytic fluid and forms part of a resistor/ power source for which the conductive layer provides one electrode, whereby the resistance of the resistor or the voltage of the power source or the deliverable current of the power source varies with the progress of the fluid as it migrates along the substrate.

According to a first alternative aspect of the first embodiment, the conductive layer also provides the counter-electrode of the resistor/power source. Preferably, the conductive layer is patterned to provide two separate, interleaved portions, each of which forms one of the electrodes.

According to a second alternative aspect of the first embodiment, the fluid is again a conductive/electrolytic fluid and forms part of a resistor/power source for which the conductive layer provides one electrode, whereby the resistance, current driving capability of the power source varies with the progress of the fluid as it migrates along the substrate. The conductive layer provides the counter-electrode of the resistor/power source, and the conductive layer is patterned to provide a plurality of counter-electrodes associated with the one electrode. The counter electrodes are arranged to be contacted successively by the fluid as it migrates along the substrate.

In this aspect of the present invention, the variable characteristic to be measured is resistance, conductivity, or voltage.

Alternatively, according to a third alternative aspect of the first embodiment, again, the fluid is a conductive/ electrolytic fluid and forms part of a resistor/power source for which the conductive layer provides one electrode, whereby the resistance/voltage of the resistor/power source varies with the progress of the fluid as it migrates along the substrate. In this alternative aspect of the first embodiment of the present invention, the substrate comprises a plurality of channels. The article comprises a conductive coating on the bottom area only of at least some of said channels to provide the counter-electrode of the resistor/power source. With this additional conductive coating, capacitance is additionally a measurable characteristic. Preferably, in this third alternative embodiment, the conductive layer is patterned to provide a plurality of electrodes associated with the counter-electrode, which electrodes are arranged to be contacted successively by the fluid as it migrates along the channels of the substrate.

According to a fourth alternative aspect of the first embodiment, the fluid is again a conductive/electrolytic fluid and forms part of a resistor/power source for which the conductive layer provides one electrode, whereby the resistance/ voltage of the resistor/power source varies with the progress of the fluid as it migrates along the substrate. The conductive coating is patterned to provide a plurality of counter-electrodes associated with the said one electrode, which counter-electrodes are arranged to be contacted successively by the fluid as it migrates through the channels of the substrate. In this alternative, capacitance is an additional measurable variable electrical characteristic.

In accordance with a second embodiment of the present invention, the article of the present invention as broadly defined above additionally comprises an insulating layer located adjacent to the substrate to be contacted by the fluid as it migrates along the substrate, and a conductive layer adjacent to the insulating layer on the other side thereof.

According to this embodiment, the fluid preferably is a dielectric fluid and forms part of a capacitor for which the conductive layer provides one electrode, whereby the capacitance of the capacitor varies with the progress of the fluid as it migrates along the substrate. Thus, capacitance is a measurable variable electrical characteristic.

According to a first preferred aspect of the second embodiment, the conductive layer also provides the counter-electrode of the capacitor. More preferably, the conductive layer is patterned to provide two separate, interleaved portions, each of which forms one of the electrodes.

According to a second aspect of the second embodiment of the present invention, again, the fluid preferably is a dielectric fluid and forms part of a capacitor for which the conductive layer provides one electrode. In this second aspect, the conductive layer is patterned to provide a plurality of counter-electrodes associated with the one electrode; which counter electrodes are arranged to be contacted successively by the fluid as it migrates along the substrate. As the fluid migrates along the substrate, the capacitor electrode surface increases which, in turn, will increase the capacitance of the capacitor.

Alternatively, according to a third preferred aspect of the second embodiment of the present invention, the substrate comprises a plurality of channels, and the article further comprises a conductive coating on the channels to provide the counter-electrode of the capacitor. Preferably, the conductive layer is patterned to provide a plurality of electrodes associated with the said counter-electrode, which electrodes are arranged to be contacted successively by the fluid as it migrates along the channels of the substrate.

Further alternatively, according to a fourth aspect of the present invention, again, the fluid preferably is a dielectric fluid and forms part of a capacitor for which the conductive layer provides one electrode. Moreover, again, the article further comprises a conductive coating on the channels to provide the counter-electrode of the capacitor. Furthermore, the conductive coating is patterned to provide a plurality of counter-electrodes associated with the one electrode, which counter-electrodes are arranged to be contacted successively by the fluid as it migrates along the substrate.

As an alternative to the preferred substrate having a micro-structured surface defining a plurality of channels, other suitable substrates including porous materials, wick materials and absorptive materials are used according to all preferred embodiments and aspects of the present invention. For example, the substrate used in the above-described first preferred embodiment of the present invention could be a wick material adjacent to the conductive layer. Similarly, the substrate used in the above-described second embodiment could be a wick material being adjacent to the insulating layer. In case the variable characteristic to be measured is conductivity, the quality of the measurement is not substantially influenced by the material used. In case capacitance is the measurable variable characteristic, a micro-structured substrate defining a plurality of channels is preferred as it provides a larger contact area compared to, for example, a wick material. In case of a wick material, the combination of the wick material and the dielectric fluid has to be selected such that the dielectric fluid migrates through the wick material at a suitable rate.

According to all embodiments and aspects, the article of the present invention comprises a processor for processing the provided measurable variable electrical characteristic. Preferably, the processor is operatively connected to a radio-frequency device. In the context of the present invention, the term "radio-frequency device" means any suitable RFID device. For example, "radio-frequency device" means a device that uses antenna impedance modulation for information flow from a passive antenna to an active antenna. A suitable example is described in the publication AN680 "Passive RFID Basics" issued by Microchip Technologies Inc. of Chandler, AZ 85224-6199, U.S.A. Preferably, an RFID IC is used in the article of the present invention to provide an interrogation of the indicator via the RFID communication protocol. RFID devices are available, for example, from Philips (e.g., "Icode"), or Texas Instruments (e.g., "Tag-It").

Therefore, the present invention also encompasses a method of monitoring the exposure of an article to which an indicator is attached, comprising the steps of: a) reading a measurable variable electrical characteristic provided by the indicator upon being activated; and b) processing the read measurable variable electrical characteristic to provide an article-specific exposure characteristic.

Preferably, each fluid is selected from the group consisting of viscous fluids, viscoelastic fluids, and combinations thereof.

In a preferred article of the invention, the article is designed such that there is essentially no leakage of fluid (s) from the article prior to or subsequent to activation.

In the article of the invention, the fluid has a fluid flow front (as defined below) as it migrates through the substrate and each fluid front variation is preferably less than about 5 mm, more preferably less than about 3 mm, and most preferably less than about 1 mm.

In some embodiments of the article of the invention, when a visual indication is also required of the progress of the fluid as it migrates through the substrate, the substrate may be retroreflective whereby the progress of each fluid as it migrates along or across, respectively, the substrate obscures the retroreflective substrate.

Preferably, the fluid is separated from the substrate by a barrier until activation of the article is desired, wherein the barrier can subsequently be manipulated to allow contact of the fluid with the substrate.

It is further preferred that the article further comprises a covering which sufficiently encases the substrate, the barrier, and the fluid to allow the fluid, upon activation of the article, to migrate through the substrate, but not to substantially escape from the article, wherein at least a portion of the covering is sufficiently transparent and wherein the colouring and levels of transparency of the covering, substrate and fluid are selected to allow an observer to view the fluid with the unaided eye as the fluid migrates along or across, respectively the substrate.

In another preferred embodiment of an article of the invention having a cover, the cover further comprises a scale which is positioned on a portion of the cover through which the progress of the fluid flow may be viewed and which extends in the direction of the fluid flow.

In another embodiment of the article of the invention, the article further comprises indicia on the cover indicating how to activate the article.

In another embodiment of the article of the invention having a cover, the cover comprises two pieces of tape joined together which encase the substrate and the fluid, wherein the first piece of tape is transparent, single-sided adhesive tape and wherein the second piece of tape is a double-sided adhesive tape, wherein the single-sided adhesive tape is positioned such that the progress of the flow of fluid can be viewed therethrough and wherein the adhesive-coated side of the single-sided tape is positioned toward the fluid and the substrate. The double-sided adhesive tape forms the bottom of the cover. One adhesive side of the double-sided adhesive tape faces the substrate, and the opposite adhesive side - which can optionally be covered by a release liner - can be used to attach the article to an item to be monitored.

The substrates useful in the articles of the invention may have various optical properties including, but not limited to, those selected from the group consisting of retroreflectivity, diffractive properties, diffusive properties, and partial internal reflective properties.

In one preferred embodiment of the present invention, the substrate has optical characteristics and the progress of the fluid as it migrates along the substrate obscures the optical characteristics of the substrate.

An article of the invention may comprise only one fluid and only one substrate, for example. In some embodiments, the article of the invention may comprise a plurality of the fluids. In some embodiments of the invention, the article may comprise a plurality of the substrates. In some embodiments of the article of the invention, the article may comprise a plurality of the fluids and a plurality of the substrates.

BRIEF DESCRIPTION OF THE DRAWINGS

Fig. 1    illustrates a perspective front view of a timer article or time temperature article of the invention prior to activation;
Fig. 2    illustrates a cross-sectional view of a first embodiment of an article of the present invention;
Fig. 3    illustrates a cross-sectional view of a second embodiment of an article of the present invention;
Fig. 4    illustrates a top view of a conductive layer for use in the first or second embodiment of the present invention;
Fig. 5    illustrates a cross-sectional view of a preferred aspect of the first embodiment of an article of the present invention;
Fig. 6    illustrates a cross-sectional view of a preferred aspect of the second embodiment of an article of the present invention;
Fig. 7    illustrates a top view of a patterned conductive layer or conductive coating to provide a plurality of electrodes for use in the first or second embodiment of the present invention;
Fig. 8    illustrates a schematic view of the electrical connection of a RFID IC and a RF antenna to the substrate of the article of the present invention;
Fig. 9    illustrates a schematic view of a specific embodiment of an article of the present invention wherein capacitance is a measurable characteristic; and
Fig. 10    illustrates a schematic view of another specific embodiment of an article of the present invention wherein conductivity/voltage is a measurable characteristic.

DETAILED DESCRIPTION OF THE INVENTION

Substrates

Substrates useful according to the invention are those known to be suitable for use in time and time-temperature indicators that provide information based on the migration of a fluid along or across, respectively, the substrate. Examples of suitable substrates include porous materials, wick materials and absorptive materials for use in time and time-temperature indicators, such as those described in US-A-3 243 303; 4 229 813; 4 382 700; 4 408 557. Preferred substrates useful according to the invention are those having a micro-structured surface, wherein the micro-structured surface defines a plurality of channels. Such a substrate has a predetermined channel pattern, wherein the maximum depth and width of the channels is less than about 1,000 microns. The channels may or may not be interconnected. The channels may, optionally, be formed from a series of projections. Preferably the channel portion of the substrates of the invention is regular, orderly, and non-random. Preferably the channels are in an array. In some embodiments, each channel would be substantially identical or identical to an adjacent channel. In some embodiments, one may wish to have differing channel geometries and/or sizes, either widthwise across the channelled surface or lengthwise down the channelled surface.

The substrates useful according to the invention are typically flexible. Articles with flexible substrates may be easier to attach to a surface with which the indicator is to be associated. However, semi-rigid and rigid substrates also may be useful according to the invention. Likewise, the articles of the invention are typically flexible. However, the articles of the invention may also be semi-rigid or rigid.

The substrate may or may not be retroreflective depending on the particular embodiment. Examples of useful non-retroreflective substrates include, but are not limited to, micro-structured substrates having a series of channels therein, wherein the channels are linear, parallel, and closely spaced. The use of a retroreflective micro-structured substrate may provide a number of advantages to the articles of the invention. These include the preferably highly visible fluid flow front with the use of the retroreflective substrate when the article is designed to be used in such a manner in which the fluid obscures the retroreflective substrate.

It is preferable that the substrate and/or other materials used in the articles do not absorb the fluid, so as not to interfere with the fluid flow (i.e., the substrate and other components of the article, which the fluid may come in contact with, should preferably be essentially fluid impermeable, most preferably fluid impermeable). Preferably the substrate and/or other materials used in the article, which the fluid may come into contact with, (such as the cover, for example) are essentially non-absorbent, most preferably non-absorbent with respect to the fluid with which they are used. Preferably also the fluid flow is only along or across the channels of the substrate and there is essentially no diffusion, most preferably no diffusion, of the fluid into the substrate itself (or any other components of the article with which the fluid may come into contact). Thus, the fluid most preferably does not become absorbed by, diffuse into, or permeate the substrate itself or other components of the article it may come into contact with.

The flow of the fluid through the substrate is preferably via passive flow. That is, it should preferably be through capillary action and optionally gravitational effects, although preferably any gravitational effects are minimal or nonexistent so that the orientation of the indicator does not affect its performance. The flow of the fluid should preferably not be "active," (i. e., caused by devices such as pumps, external vacuum sources, etc.).

As discussed previously, the substrate of the article optionally contains channels therein. Optionally the channels are interconnected. Preferably the channels are interconnected for a more even fluid flow front. The channels are typically provided on an exposed surface of the substrate.

Depending on the substrate shape and channel design, it may be that a small amount of fluid could leak out of the substrate sides (or edges) as it moves along the fluid flow path. Such fluid, which leaks out, could potentially re-enter the substrate channels further along the fluid flow path contributing to a non-uniform fluid flow front. Thus, in some cases it is preferred to seal the edges or sides of the substrate as long as the edge or area which allows fluid entry is unsealed and the edge or area toward which the fluid flows is unsealed to ensure a more uniform fluid flow front.

The channels of the micro-structured substrate, if provided, can have one or more shapes. Typically the channels within the substrate are similarly shaped. Examples of useful channel cross-sectional shapes include, but are not limited to, the following: v-shaped channels, u-shaped channels, semi-circle-shaped channels, and square u-shaped channels. The channels, when viewed from above, can be linear or non-linear. For example, they may be straight, curved, twisted, crooked, tortuous, etc. The channels may optionally be formed by a series of geometric projections, wherein the paths between the projections become the channels. This would be the case for retroreflective cube-corner sheeting discussed later herein.

Typically the depth of the channels range from about 5 to less than about 1,000 microns, more typically about 10 to about 500 microns, preferably about 25 to about 200 microns, and most preferably about 25 to about 100 microns. Typically the width of the channels range from about 5 to about less than about 1,000 microns, more typically about 10 to about 500 microns, preferably about 25 to about 250 microns. Typically the spacing of the channels is such that a channel is within about 5 to less than about 1,000 microns of another channel, more typically about 10 to about 500 microns, and preferably about 10 to about 250 microns.

The shape, length, and number of channels on the substrate can vary depending on a number of factors. These include, for example, the length of time one desires for the fluid to run through the substrate, the fluid to be used with the substrate, and the level to which the fluid flow should or should not be influenced by forces other than capillary forces (such as gravity). To design an article substantially unaffected by gravity, one should preferably utilize a substrate with sufficiently small channels.

The substrates useful in preferred embodiments of the invention are micro-structured. A variety of different classes and types of channel-containing micro-structured substrates are useful, preferred substrates being those that retain their geometry and surface characteristics upon exposure to the fluids used in the article of the invention, as well the temperature, humidity, and other environmental conditions likely to be encountered.

The non-retroreflective micro-structured substrates are preferably formed from any thermoplastic materials suitable for casting, profile extrusion, or embossing including, for example, polyolefins, polyesters, polyamides, poly (vinyl chloride), polymethyl methacrylate, polycarbonate, nylon, etc. Polyolefins are preferred, particularly polyethylene or polypropylene, blends and/or copolymers thereof, and copolymers of propylene and/or ethylene with minor proportions of other monomers, such as ethylene/vinyl acetate. Polyolefins are preferred because of their excellent physical properties, ease of processing, and typically lower cost than other thermoplastic materials having similar characteristics. Polyolefins readily replicate the surface of a casting or embossing roll and are also readily profile extruded. They are tough, durable and hold their shape well, thus making such films easy to handle after the casting or embossing process. Alternatively, the micro-structured substrate can be cast from curable resin materials such as acrylates or epoxies, and cured by exposure to heat, ultraviolet (UV), or E-beam radiation.

The substrates useful according to the invention may optionally have one or more of the following optical characteristics: retroreflectivity, total internal reflection, and partial internal reflection. These include refractive and/or diffractive properties, for example. The micro-structured substrate itself can have specular or diffusive properties to improve the detectability of the fluid as it moves on the micro-structured substrate. As the fluid moves on the micro-structured substrate, it wets the micro-structured surface, causing the refractive index difference between the micro-structured surface and adjacent fluid to decrease (compared to air), thereby obscuring the micro-structured substrate and improving its transparency.

Fluids

A variety of fluids are useful according to the present invention. Examples thereof include, but are not limited to, those selected from the group consisting of viscous fluids, viscoelastic fluids, and mixtures thereof.

Furthermore, one can select from among fluids with different surface tension characteristics. Typically, fluids can be used whose surface tension at 23°C is in the ranges from about $10 \times 10^3$ N/m to about $80 \times 10^{-3}$ N/m, preferably about $10 \times 10^{-3}$ N/m to about $60 \times 10^{-3}$ N/m, even more preferably about $10 \times 10^{-3}$ N/m to about $50 \times 10^{-3}$ N/m, and most preferably about $10 \times 10^{-3}$ N/m to about $40 \times 10^{-3}$ N/m.

Furthermore, one can select from among fluids with different density characteristics. Typically, fluids can be used whose density at 23°C ranges from about 0.5 to about 2 grams/cc, preferably about 0.5 to about 1.5 grams/cc, and most preferably about 0.8 to about 1.5 grams/cc.

Finally, one can select from among fluids with different zero rate shear viscosity characteristics. Typically, fluids can be used whose zero rate shear viscosity at 23°C ranges from about $1 \times 10^{-3}$ to about $1 \times 10^6$ Pa·s, preferably about 0.1 to about $1 \times 10^5$ Pa·s, and most preferably about 1 to about 10,000 Pa·s.

For time/temperature indicator articles of the invention, the fluid selected is temperature sensitive. For timer articles of the invention, the fluid selected is substantially temperature insensitive, most preferably temperature insensitive. Temperature sensitive fluids are defined as having an activation energy ($E_a$) of 3 kcal/mole or more and a Quotient $Q_{10}$ of preferably greater than 1.1. Temperature insensitive fluids are defined as having an $E_a$ of less than 3 kcal/mole and preferably a $Q_{10}$ of 1.1 to 1.0. The $Q_{10}$ is an indication of how much faster a reaction (such as chemical change, microbial growth, or enzymatic spoilage of a perishable product) occurs in response to a 10°C increase in temperature wherein T is provided in °C:

$$Q_{10} = (\text{Rate of change at T} + 10°C)/ (\text{Rate of change at T})$$

Suitable fluids according to the present invention include, for example, viscoelastic and viscous fluids and combinations thereof that provide the desired properties for migration into the channels of the micro-structured surface in response to time and/or cumulative thermal exposure. For capillary action to primarily drive the migration of the fluid into the channels of the micro-structured substrate, the surface energies of the article components should preferably cause the local contact angle of the fluid on the micro-structured surface of the substrate to be less than about 90 degrees, more preferably less than about 25 degrees, within the range of intended use temperatures. The contact angle is a function of the surface energy of the micro-structured surface, the surface energy of the fluid (e. g. liquid), and the interfacial energy between the two.

The article of the invention is preferably designed to provide sufficient fluid to fill the channels of the micro-structured surface as the fluid migrates along the channels. The components of the article should also preferably be chosen to provide a desired rate of migration of the fluid into the channel structure of the micro-structured substrate. In a time indicator, the fluid such as a viscous liquid, for example, should preferably migrate through this channel structure at a rate that is essentially independent of temperature, and essentially independent of orientation, i.e., gravitation. By controlling the properties of the liquid, the indicating device can be constructed to provide an indication of the time expired. Accordingly, it is desirable to be able to select a liquid having suitable characteristics for the amount of time that needs to be monitored.

As discussed above, $Q_{10}$ and $E_a$ are useful as a quantification of rate of degradation or other rate of change of an object to be monitored. It is also useful to quantify the effective $E_a$ or $Q_{10}$ of the fluid to select a suitable fluid for the object to be monitored. As with the particular object to be monitored, it is possible to select various fluids and perform experiments on indicators comprising the fluids to determine the rate of change of the visually observable indication at various temperatures for each fluid. It is then possible to calculate a measured effective $E_a$ and/or $Q_{10}$ for various fluids with a given substrate to best fit the intended use of the indicator.

It is also possible to measure the temperature dependence of the flow properties of the fluid independently and estimate the effective activation energy.

For example, one can measure the dynamic mechanical properties of a fluid as a function of frequency at various temperatures and perform time-temperature superposition according to classical procedures known in the art of rheology. The temperature dependent shift factors that result can be fit to the Williams-Landel-Ferry equation and the effective activation energy can then be calculated according to the well-known equation of Ferry. See John D. Ferry, Viscoelastic Properties of Polymers, (John Wiley and Sons, Inc, 1980). One skilled in the art of rheology would be able to use the equation of Ferry as described.

In a time-temperature indicator, the fluid such as a viscoelastic liquid for example, preferably migrates along the channel structure at a rate that preferably increases with temperature in a sufficiently similar way to the change in decay rate of the object to be monitored to provide an accurate indication of the time and temperature conditions experienced by the indicator. By selecting a fluid with the appropriate properties, the indicating device can be constructed to provide an indication of a predetermined cumulative thermal exposure. It will often be useful to provide an indication of a predetermined allowable cumulative thermal exposure for a particular perishable item, such as food, medicine, photographic supplies, and vaccines. Accordingly, it is desirable to select a fluid having suitable characteristics for the particular product to be monitored.

Further information on fluids suitable for use in preferred indicators in accordance with the invention can be obtained, if required, from WO 01/88634.

Fluid Separation

The fluid should remain separated from the substrate until the article is activated. To activate the article, the indicator is manipulated such that the fluid is allowed to contact at least some of the channels of the substrate. Prior to activation, the article can preferably be stored almost indefinitely, provided that storage does not permit any material degradation in performance. The fluid may be separated from the substrate, for example, by a physical barrier or by a space or distance. The separation by space is useful for an article that may be a movement indicator that activates when the article is moved by lifting, tilting, and/or inverting, for example, thereby placing the fluid in contact with the substrate channels.

The use of a physical barrier is advantageous for articles that one wishes not to become activated merely by the position of the article and requires an actual step such as penetrating, rupturing, or removing the barrier, for example, to allow fluid contact with the substrate. A number of fluid barriers may be used according to the invention. For example, the barrier could be a reservoir or container such as a pouch, sack, or bladder in which the fluid is contained. Upon applying pressure to the pouch, sack, or bladder it would rupture allowing contact of the fluid with the substrate. This pressure may be applied by finger pressure, for example. Other barriers include, for example, gates, valves, etc. These barriers could be manipulated or removed, for example, by pulling a tab, pulling a cord, removing a laminated seal, breaking a capsule, etc. to allow contact of the fluid with the substrate. Other fluid reservoirs and barrier systems and methods of activation would be useful in the articles of the invention. The barrier could be made from a number of materials including but not limited to plastics, adhesives, metals, glass, etc.

Covering

The article of the invention may optionally include a covering which covers a portion or all of the article. Such a covering would typically cover a portion or all of the fluid, any barrier and the substrate. The covering of the article may be flexible, semi-rigid or rigid. The covering is preferably chosen such that it does not interfere with the activation of the article and the flow of the fluid along the fluid flow path, unless the cover also functions to separate the fluid from the substrate until it is removed, as described above. The covering preferably should be selected to prevent fluid from leaking from the article. The covering can be made from a variety of materials, including, but not limited to, plastics. The covering may be a one-piece construction or may be a multiple-piece construction formed, for example, by two pieces of tape joined together. The cover could be made of an opaque material provided with a transparent window through which to view the fluid progress, for example. Alternatively the cover may be made from a transparent material with graphics thereon. A portion of the transparent cover should preferably be left free from graphics to provide a window to view the fluid progression. Other cover configurations are also possible. The cover may be adhered to the substrate and other components of the article such as a fluid reservoir, for example, in a variety of ways including, for example, lamination of a pressure sensitive adhesive tape onto the substrate and the fluid reservoir such that the tape backing becomes the cover. Alternatively, a transfer pressure sensitive adhesive can be laminated to the substrate and a fluid reservoir, for example, and a cover can be laminated to the pressure sensitive adhesive.

This invention will be better understood by referring to the accompanying figures.

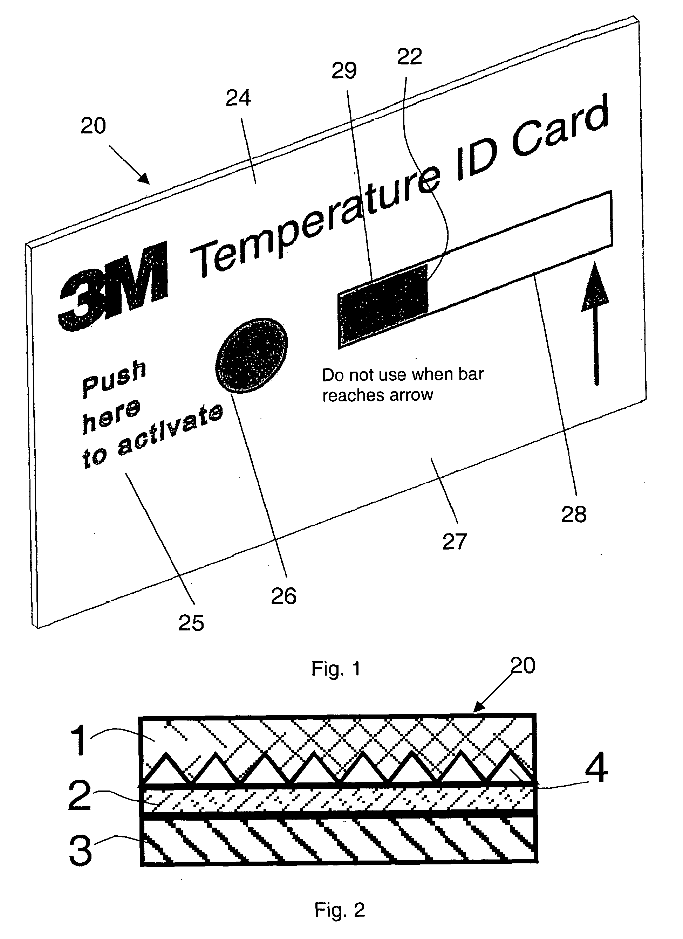

Fig. 1 illustrates a timer article 20 of the invention. Timer article 20 shown in Fig. 1 is of a multi-layer construction which is, however, not shown in Fig. 1 for simplicity. The article 20 includes cover 24. Cover 24 contains printing thereon except for a rectangular section identified as 28, which is left transparent to provide a window so a viewer can observe the fluid flow upon activation. The printing on the cover 24 also includes warning instructions 27, activation point 26 positioned over a fluid reservoir, and activation instructions 25. In Fig. 1, activation has already occurred. A colored bar 29 shows the elapsed time. The edge of the bar 29, which moves over time as the fluid moves along the substrate, is identified as 22 and is also known as the fluid flow front. The fluid flow front is the outermost boundary of the fluid that has moved along the substrate.

Fig. 2 of the accompanying drawings illustrates a cross-sectional view of a first preferred embodiment of an article 20 of the present invention. Article 20 of this embodiment comprises substrate 1 having a micro-structured surface that defines a plurality of channels 4. Furthermore, article 20 comprises a conductive layer 2 that is located adjacent to the micro-structured surface of the substrate 1. Finally, an insulator layer 3 is provided supporting the entire structure and insulating the conductive layer 2 against the product to which the article 20 is attached. The channels 4 are provided for a fluid that is separated from the substrate 1 until an activation of the article 20 is desired by a user. The conductive layer 2 is located adjacent to the micro-structured surface of the substrate 1 so that it is contacted by the fluid as it migrates through the channels 4 of the substrate 1. The article 20 can be activated at a desired point in time to allow contact of the fluid with at least one of the channels 4 of the substrate 1. Until activation, the fluid is stored in the above-mentioned fluid reservoir (not shown) that is separated from the channels by a suitable barrier (not shown) or space.

As described above, instead of the channelled substrate, it is encompassed by the present invention that other material such as porous materials, wick materials and absorptive materials are used as substrate 1.

With such construction, the article 20 provides a measurable variable electrical characteristic that varies in correspondence with the progress of the fluid through the channels 4. The fluid is, for example, a conductive or electrolytic fluid that forms part of a resistor or power source, respectively, for which the conductive layer 2 provides one electrode. In this case, the resistance/conductivity or voltage of the resistor/conductor or power source varies with the progress of the fluid as it migrates along the channels 4 of the substrate 1.

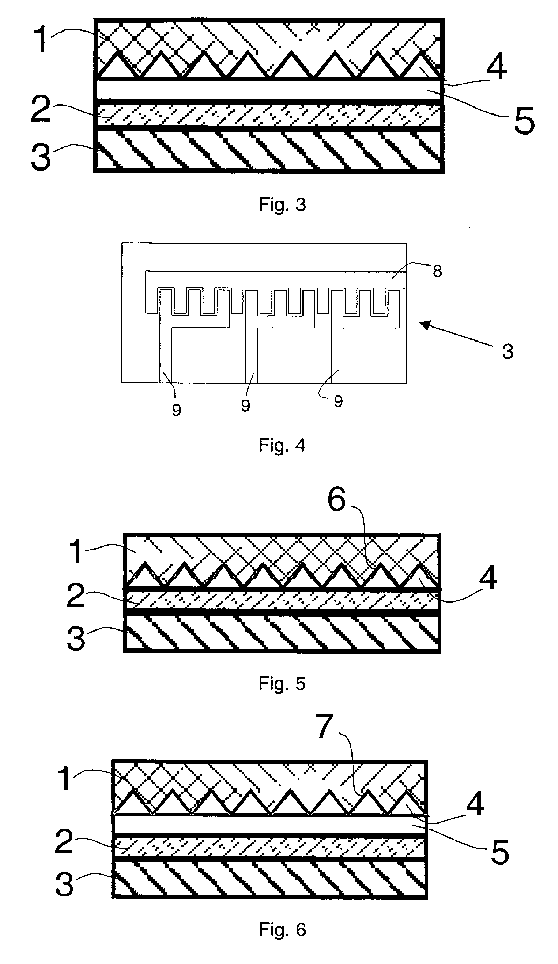

It is preferred that the conductive layer also provides the counter-electrode of the resistor/power source. A more preferred embodiment of this feature is shown in Fig. 4. In this specific embodiment, the conductive layer forms a counter-electrode 8 as well as three distinct detection electrodes 9. The detection electrodes 9 are contacted successively by the fluid as it migrates along the channels 4 of the substrate 1. The counter-electrode 8 and the detection electrodes 9 comprise electrode fingers that are arranged to each other in an interleaving relationship. Thus, the conductive layer 2 provides at least two separate, interleaved portions, each of which forms one of the electrodes.

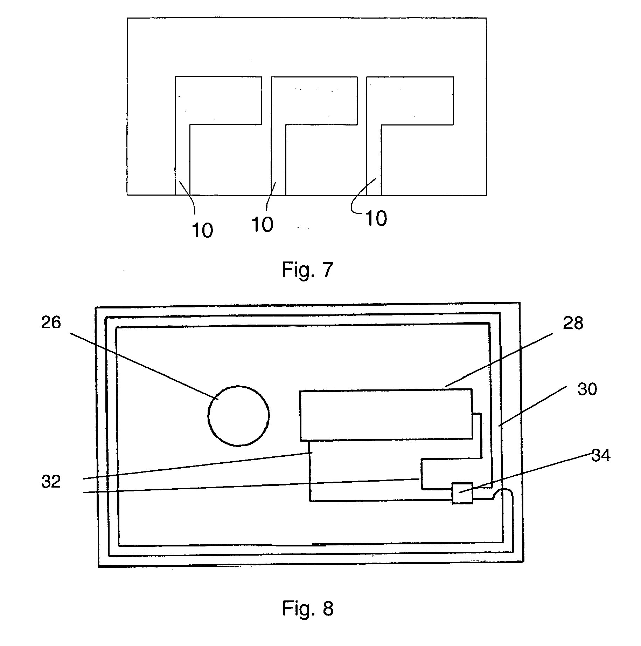

Alternatively, the fluid is, for example, a conductive or electrolytic fluid that forms part of a resistor or power source, respectively, for which the conductive layer 2 provides one electrode. The conductive layer 2 is patterned to provide a plurality of counter-electrodes 10 associated with the one electrode formed by the fluid. The counter electrodes 10 are arranged to be contacted successively by the fluid as it migrates along the channels of the substrate. See Fig. 7.

Fig. 5 illustrates a further preferred design of this first embodiment of the present invention. The article 20 shown in Fig. 5 additionally comprises a conductive coating 6. Conductive coating 6 is provided on the bottom area of the channels 4 only. For example, in case a micro-replicated film is used as substrate 1, the micro-replicated film is first metalized. The channel top is either not metalized or removed thereafter, e.g., with electro-milling.

Such a conductive coating 6 on the bottom area of the channels 4 also provides a counter electrode of the resistor/power source, i.e., a counter electrode to the electrode formed by the fluid. Thus, with this particular preferred design, the article provides for conductivity and capacitance as a measurable variable electrical characteristic.

In the embodiment shown in Fig. 5, the conductive layer 2 may be patterned to provide a plurality of electrodes (e.g., electrodes 10 shown in Fig. 7) associated with the said counter-electrode formed by the conductive coating 6, which electrodes are arranged to be contacted successively by the fluid as it migrates along the channels of or otherwise along the substrate. Alternatively, the conductive coating 6 is patterned to provide a plurality of counter-electrodes associated with the said one electrode formed by the conductive layer. These counter-electrodes are arranged to be contacted successively by the fluid as it migrates along the channels 4 of the substrate 1.

Fig. 3 illustrates a first alternative of a second embodiment of the present invention. Article 20 of this embodiment comprises substrate 1 having a micro-structured surface that defines a plurality of channels 4. Furthermore, article 20 comprises an insulating layer 5 that is located adjacent to the micro-structured surface of the substrate 1. A conductive layer 2 is provided adjacent to the insulating layer 5 on the other side thereof. Furthermore, an insulator layer 3 is provided. This embodiment provides capacitance as a measurable variable electrical characteristic. According to this embodiment, the fluid preferably is a dielectric fluid and forms part of a capacitor for which the conductive layer 2 provides one electrode, whereby the capacitance of the capacitor varies with the progress of the fluid as it migrates through the channels of the substrate 1.

As described above, instead of the channelled substrate, it is encompassed by the present invention that other material such as porous materials, wick materials and absorptive materials are used as substrate 1.

According to a first alternative design of this embodiment, the conductive layer 2 also provides the counter-electrode of the capacitor. Preferably, the conductive layer 2 is patterned to provide two separate, interleaved, portions each of which forms one of the electrodes. This is shown in Fig. 4 where reference numeral 8 denotes a counter-electrode, and reference numerals 9 denote detection electrodes. In this case, for example, the fluid enters the channels from the left (of Fig. 4) and migrates to the right. With increased coverage of the detection electrode part of conductive layer 2 and of the counter-electrode part, the capacitance changes.

According to a second alternative design of this second embodiment, the fluid preferably is a dielectric fluid and forms part of a capacitor for which the conductive layer 2 provides one electrode, and the conductive layer 2 also provides the counter-electrode of the capacitor. Preferably, the conductive layer is patterned to provide a plurality of counter-electrodes associated with the said one electrode.

According to a third alternative design, the article 20 further comprises a conductive coating 7 on the channels to provide the counter-electrode of the capacitor. This alternative embodiment is shown in Fig. 6. Preferably, as shown in Fig. 6, the channels are completely coated by the conductive coating. It is preferred in this third alternative design that the conductive layer 2 is patterned to provide a plurality of electrodes 10 associated with the said counter-electrode 7. This is illustrated in Fig. 7 where it is shown that the conductive layer 2 is patterned into three segments 10.

Alternatively, again, the fluid preferably is a dielectric fluid and forms part of a capacitor for which the conductive layer 2 provides one electrode, and a conductive coating 7 is provided on the channels. The conductive coating 7 is patterned to provide a plurality of counter-electrodes 10 associated with the said one electrode. This fourth alternative is shown in Fig. 7 assuming that conductive coating 7 is patterned as shown in this Figure.

As is clear from the above description of the preferred embodiments, the present invention provides for measurable variable electrical characteristics. For example, a variable capacitance is indicative of the progression of a fluid along a fluid path, based on time or on time and temperature exposure. As the fluid progresses along the channels, the capacitance value changes due to an increase in surface area of the capacitor. In the alternatives having an insulating layer as shown in Figs. 3 and 6, a highly insulating material, for example very thin polyester film (PET), such as the material sold by Du Pont Teijin Films under the designation "Mylar," is preferably used in order to increase sensitivity with respect to changes of capacitance.

As shown in Fig. 8, the present invention preferably uses an ISO SmartCard format. Preferably, the invention uses the ISO standard 13.56 MHz RFID protocol. An RFID IC 34 processes and/or stores information related to the article, which can be obtained by the interrogator of the article, and is thus connected to the electrode(s) and counter-electrode(s) of the article. The RFID IC 34 preferably includes two additional contacts 32 and a small 5 bit A/D converter with memory to measure temperature history during a RF reading process.

The RFID IC 34 is connected to the contacts to the article, i.e., the display 28. Furthermore, antenna 30 which is preferably provided along the circumference of the article 20 is also connected the RFID IC 34. The activation field 26 is also shown in Fig. 8.

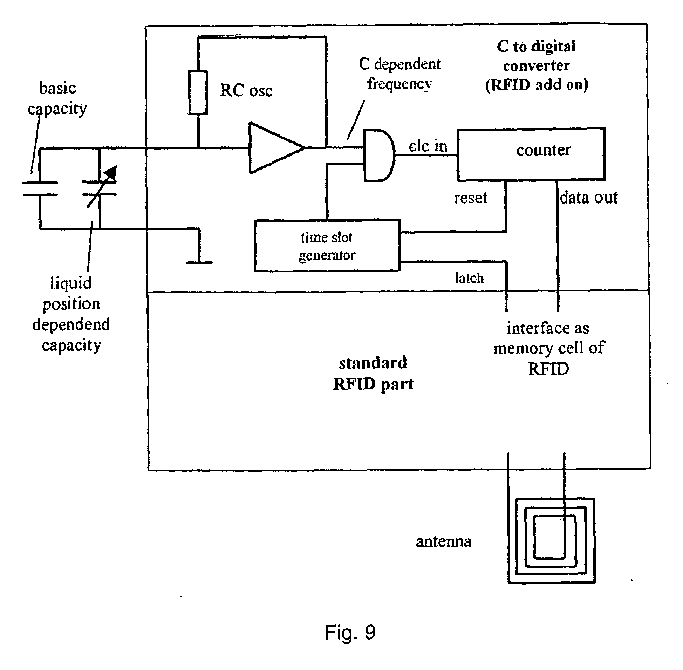

The change of capacitance that takes place as the fluid in the indicator progresses along the channels of the substrate is preferably used in a tuning circuit for an oscillator (see Fig. 9). The change in capacitance changes the frequency of the oscillator. As shown in Fig. 9, the article according to the present invention is usable as a variable capacitance in an RF device of the type known from conventional RFID technology. In the preferred embodiment shown in Fig. 9, a constant capacitance is connected in parallel to the variable capacitance provided by the article of the present invention. This capacitance circuit is connected to a comparator that generates a pulse train when the circuit is activated. This pulse train, whose frequency depends on the variable capacitance of the article, is counted with a counter. This count value is included in one of the available fields in the standard RFID protocol and can be obtained by interrogation via the antenna. Thus, the article of the present invention can be remotely and automatically checked without a necessity to actually visually inspect the article. The information provided by the variable capacitance gives the user a clear indication about the status of the product carrying the article of the present invention, and about elapsed time and/or temperature history.

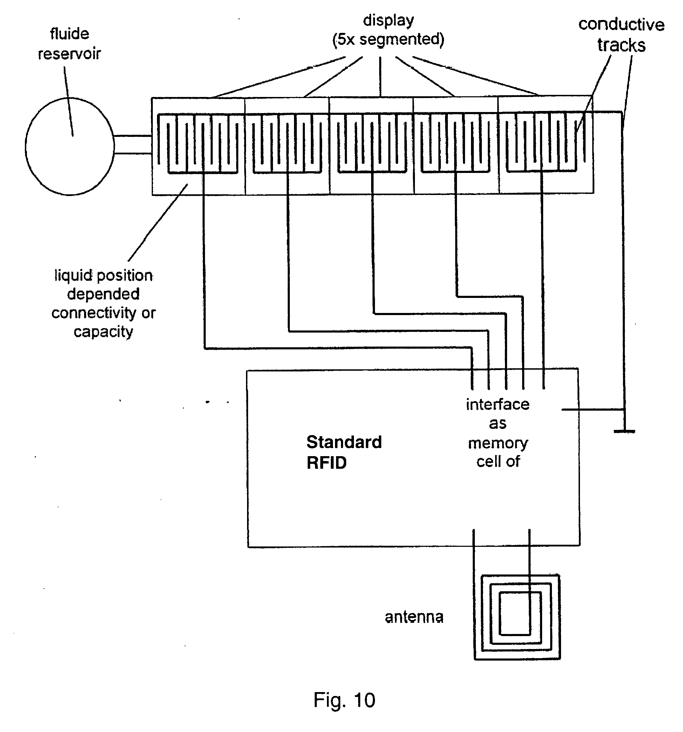

A more simple application of the present invention is illustrated in Fig. 10. In this example, the resistance or conductivity, respectively, is used as a measurable variable electrical characteristic. In particular, a fluid having good conducting properties is used. In the example shown in Fig. 10, the article is divided or segmented in five segments (in the example, five segments are shown providing a 20% accuracy (5bits)). In each segment, electrode fingers are present that interleave with fingers of a corresponding counter-electrode extending throughout all segments. Fig. 10 also shows the fluid reservoir that stores the fluid until the article is activated. Upon activation of the article, fluid flows into the first segment, i.e., the most left segment in Fig. 10. As the fluid progresses through the channels, "switches" are closed by the fluid thus registering time/temperature progression. The distinct electrodes of the five segments are connected to a standard RFID interface, and the time/temperature information can thus be obtained when the article is interrogated via an antenna.

In order to test proper activation of the article, the first segment preferably comprises a reference conductor.

In comparison to the example shown in Fig. 9, the example of Fig. 10 is easier to implement, the measured result is directly correlated with the visual indication on the article, and the costs for the IC are less. A cost disadvantage, however, is the need for one extra pad per bit on the RFID IC.

According to one alternative encompassed by the present invention, the article is read by a connectable reader that it connectable to the article and removable therefrom after reading. The reader is thus connectable to a plurality of subsequent articles to subsequently interrogate a plurality of articles one after the other.

The article of the present invention gives several advantages.

First, the time/temperature degradation is recordable at each transaction point in the logistics chain where the ID of the product would be interrogated using RFID readers. It is possible to locate, reasonably accurately, where a temperature transgression occurred. This provides detailed information for insurance claims and actions to be taken for improvement of the transportation of goods.

Secondly, the articles of the present invention are advantageous in comparison to conventional time/temperature indicators. Standard visual indicators are based on chemical processes that have a poor accuracy and poor correlation with the monitored article. Standard alternatives are electronic devices. However, those require electronic displays, such as LCD, to give a visual indication. Such products are much more expensive, heavy, prone to damage, and require an electrical power supply.

Finally, if SmartCard indicators are considered, the preferred absence of a battery in articles in accordance with the invention offers particular advantages. In a SmartCard indicator, the required battery significantly increases cost and makes it difficult to meet ISO standards for card thickness. Using a battery also means that the monitoring time span potential of the product is limited by battery capacitance.

The present invention has now been described with reference to several embodiments thereof. The foregoing detailed description has been given for clarity of understanding only. No unnecessary limitations are to be understood therefrom. Many changes can be made in the embodiments described without departing from the scope of the invention. Thus, the scope of the present invention should not be limited to the exact details and structures described herein, but rather by the structures described by the language of the claims and the equivalents of those structures.

**Claims**

1. An article comprising:

   a substrate; and
   a fluid separated from the substrate until activation of the article enables the fluid to contact the substrate; the substrate being such that the fluid can migrate along said substrate at a rate dependent on time or on time and temperature;
   said article being adapted for providing a measurable variable electrical characteristic, said variability being in correspondence with the progress of the fluid as it migrates along the substrate.

2. The article of claim 1, wherein the substrate has a micro-structured surface that defines a plurality of channels, the said variability being in correspondence with the progress of the fluid as it migrates along the channels.

3. The article of claim 1 or claim 2, wherein the measurable variable characteristic is capacitance, and/or conductivity, and/or voltage.

4. The article of any one of the preceding claims, further comprising a conductive layer located adjacent to the surface of the substrate to be contacted by the fluid as it migrates along the channels of the substrate.

5. The article of claim 4, wherein the fluid is a conductive/electrolytic fluid and forms part of a resistor/power source for which the conductive layer provides one electrode, whereby the resistance/voltage of the resistor/power source varies with the progress of the fluid as it migrates along the substrate.

6. The article of claim 5, wherein the conductive layer also provides the counter-electrode of the resistor/power source.

7. The article of claim 2, wherein the fluid is a conductive/electrolytic fluid and forms part of a resistor/power source for which the conductive layer provides one electrode, whereby the resistance/voltage of the resistor/power source varies with the progress of the fluid as it migrates along the substrate.

8. The article of claim 7, further comprising a conductive coating on the bottom area only of the channels to provide the counter-electrode of the resistor/power source.

9. The article of any one of claims 1 to 3, further comprising an insulating layer located adjacent to the surface of the substrate to be contacted by the fluid as it migrates along the substrate, and a conductive layer adjacent to the insulating layer on the other side thereof.

10. The article of claim 9, wherein the fluid is a dielectric fluid and forms part of a capacitor for which the conductive layer provides one electrode, whereby the capacitance of the capacitor varies with the progress of the fluid as it migrates along the substrate.

**11.** The article of claim 10, wherein the conductive layer also provides the counter-electrode of the capacitor.

**12.** The article of claim 2, further comprising an insulating layer located adjacent to the surface of the substrate to be contacted by the fluid as it migrates along the substrate, and a conductive layer adjacent to the insulating layer on the other side thereof.

**13.** The article of claim 12, wherein the fluid is a dielectric fluid and forms part of a capacitor for which the conductive layer provides one electrode, whereby the capacitance of the capacitor varies with the progress of the fluid as it migrates along the substrate.

**14.** The article of claim 13, further comprising a conductive coating on the channels to provide the counter-electrode of the capacitor.

**15.** The article of claim 6 or 11, wherein the conductive layer is patterned to provide two separate, interleaved, portions each of which forms one of the electrodes.

**16.** The article of claim 6 or 11, wherein the conductive layer is patterned to provide a plurality of counter-electrodes associated with the said one electrode; which counter electrodes are arranged to be contacted successively by the fluid as it migrates along the substrate.

**17.** The article of claim 8 or 14, wherein the conductive layer is patterned to provide a plurality of electrodes associated with the said counter-electrode, which electrodes are arranged to be contacted successively by the fluid as it migrates along the channels of the substrate.

**18.** The article of claim 8 or 14, wherein the conductive coating is patterned to provide a plurality of counter-electrodes associated with the said one electrode, which counter-electrodes are arranged to be contacted successively by the fluid as it migrates along the channels of the substrate.

**19.** The article of any one of claims 1 to 3, further comprising a processor for processing said provided variable electrical characteristic.

**20.** The article of claim 19, wherein the processor is operatively connected to a radio-frequency device.

**21.** The article of any one of the preceding claims, wherein the fluid is selected from the group of viscous fluids, viscoelastic fluids and combinations thereof.

**22.** The article of claim 21, wherein the viscosity of the fluid is temperature dependent.

**23.** The article of any one of claims 1 to 21, wherein the article is a timer.

**24.** The article of any one of claims 1 to 22, wherein the article is a time/temperature indicator.

**25.** Combination of the article of any of claims 1 to 22 with an RFID reader.

**26.** Combination of the article of any of claims 1 to 22 with a product to which said article is attached, and wherein the article provides information regarding the time or time-temperature history of the product.

**27.** Method of monitoring the exposure of an article to which an indicator is attached, comprising the steps of:

a) reading a measurable variable electrical characteristic provided by said indicator upon being activated; and
b) processing the read measurable variable electrical characteristic to provide an article-specific exposure characteristic.

**28.** The method of claim 27, wherein step (a) is performed using an RFID device.

**29.** The method of claim 27, wherein said indicator is an article according to any of claims 1 to 24.

3M Temperature ID Card

20

24

29

22

Push
here
to activate

Do not use when bar
reaches arrow

25

26

27

28

Fig. 1

20

1

2

3

4

Fig. 2

Fig. 3

Fig. 4

Fig. 5

Fig. 6

Fig. 7

Fig. 8

Fig. 9

fluide reservoir

display (5x segmented)

conductive tracks

liquid position depended connectivity or capacity

Standard RFID

interface as memory cell of

antenna

Fig. 10

**European Patent Office**

**EUROPEAN SEARCH REPORT**

Application Number

EP 04 02 3790

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 03/084450 A (3M INNOVATIVE PROPERTIES CO) 16 October 2003 (2003-10-16) * abstract; figures 1-3 * ----- | 1-29 | G01K3/04 |
| A | EP 0 454 313 A (ALCAN INT LTD) 30 October 1991 (1991-10-30) * abstract * ----- | 1-29 | |

TECHNICAL FIELDS SEARCHED (Int.Cl.7)

G01K

The present search report has been drawn up for all claims

| Place of search | Date of completion of the search | Examiner |
|---|---|---|
| Munich | 2 December 2004 | Thomte, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 3790

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2004

| Patent document cited in search report | | Publication date | Patent family member(s) | | Publication date |
|---|---|---|---|---|---|
| WO 03084450 | A | 16-10-2003 | WO<br>US | 03084450 A2<br>2003214997 A1 | 16-10-2003<br>20-11-2003 |
| EP 0454313 | A | 30-10-1991 | CA<br>EP<br>JP<br>US | 2014409 A1<br>0454313 A2<br>5051075 A<br>5180598 A | 11-10-1991<br>30-10-1991<br>02-03-1993<br>19-01-1993 |

EPO FORM P0459

For more details about this annex : see Official Journal of the European Patent Office, No. 12/82